# EUROPÄISCHE PATENTSCHRIFT

(11) **EP 2 303 727 B1**
(45) Veröffentlichungstag und Bekanntmachung des Hinweises auf die Patenterteilung: **04.01.2012**
(21) Anmeldenummer: 09768965.7
(22) Anmeldetag: 23.06.2009
(51) Int. Cl.: B65G 1/14

(54) **STAPELSÄULE**
STACKING COLUMN
COLONNE D'EMPILAGE

(30) Priorität: 26.06.2008 DE 102008029953
(43) Veröffentlichungstag der Anmeldung: 06.04.2011
(73) Patentinhaber: MTS Maschinenbau GmbH, 88512 Mengen (DE)
(72) Erfinder: STROBEL, Gustav, 88348 Bad Saulgau (DE)
(74) Vertreter: Arat, Dogan
(86) Internationale Anmeldenummer: PCT/EP2009/004506
(87) Internationale Veröffentlichungsnummer: WO 2009/156116

(56) Entgegenhaltungen:
- EP-A- 0 464 700
- EP-A- 0 536 571
- EP-A- 1 340 697
- DE-A1- 3 807 663
- DE-A1- 3 808 338
- DE-A1- 3 811 310
- DE-A1-102006 017 986
- DE-U1-202006 005 086

## Beschreibung

Die Erfindung betrifft eine Stapelsäule nach dem Oberbegriff des Anspruchs 1.

### Stand der Technik

Derartige Stapelsäulen dienen insbesondere zur Aufnahme von flächigen Lagergütern, wie sie bspw. bei der Herstellung von Automobilteilen anfallen. Es gibt aber noch eine Vielzahl anderer Anwendungsbereiche, die von der vorliegenden Erfindung umfasst sein sollen.

In diesem Zusammenhang wird zunächst auf die DE 10 2006 017 986 As verwiesen, welche eine Stapelsäule gemäß dem Oberbegriff des Anspruchs 1 offenbart, bei der die Verriegelung der Klinkenhebel verbessert werden soll.

Ausserdem wird auf die DE 20 2006 005 086 U1 hingewiesen, welche ebenfalls eine Stapelsäule zum Lagern oder Transportieren von Lagergütern offenbart.

In der Regel handelt es sich dabei um vertikal ausgerichtete Stapelsäulen, wie sie bspw. in der DE 38 11 310 C2 aufgezeigt sind. Dort werden zweiarmige Klinkenhebel beschrieben, die jeweils einen Lagergut aufnehmenden Tragarm sowie einen Steuerarm aufweisen, wobei beim Auflegen eines Lagergutes ein in Bereitschaftsstellung befindlicher Klinkenhebel in eine Arbeitsstellung gelangt und gleichzeitig ein darüber angeordneter Klinkenhebel durch den Steuerarm des in Arbeitsstellung gelangenden Klinkenhebels aus seiner Ruhestellung in eine Bereitschaftsstellung geschwenkt wird, wobei ferner sich die in Arbeitsstellung befindlichen Klinkenhebel gegenseitig in dieser Stellung verriegeln.

Im Stand der Technik sind auch schräge Stapelsäulen bekannt, bspw. in der EP 0 536 571. Hierbei sind zwei Wandstreifen in einem spitzen Winkel mit einer Grundfläche, Grundplatte od. dgl. verbunden. Die Klinkenhebel sind zwischen den beiden Wandstreifen aufeinander folgend vertikal in der gleichen Richtung seitlich versetzt an den Drehachsen angeordnet.

Letztendlich gibt es auch horizontal angeordnete Stapelsäulen, wie bspw. in der DE 40 20 864 C2 beschrieben. Die Drehachsen für die Klinken befinden sich dort zwischen den beiden Wandstreifen und liegen in etwa horizontal. In Gebrauchslage ragen die Klinken nach oben aus dem Wandstreifen heraus. Jede Klinke weist Steuerelemente auf, mit denen jeweils eine nachfolgende Klinke in Bereitschaftsstellung gebracht wird.

Nachteilig bei den oben genannten Stapelsäulen ist, dass deren Verriegelungselemente jeweils nur für die entsprechende horizontale oder vertikale Ausrichtung der jeweiligen Stapelsäule anwendbar sind. Wird beispielsweise die vertikale Stapelsäule aus DE 38 11 307 C2 als eine horizontal ausgerichtete Stapelsäule verwendet, kann die Funktion der Klinkenhebel nicht mehr gewährleistet werden. Dasselbe gilt für die Stapelsäule aus DE 40 20 864 C2 für den umgekehrten Fall.

### Aufgaben

Aufgabe der vorliegenden Erfindung ist es, die Verriegelung der Klinken in Gebrauchslage zu verbessern.

Eine andere Aufgabe der Erfindung ist es, Stapelsäulen bereitzustellen, die nicht auf eine horizontale Ausrichtung beschränkt sind, sondern auch in vertikaler Ausrichtung verwendbar sind.

### Lösung der Aufgaben

Zur Lösung der Aufgaben führt der kennzeichnende Teil des Anspruchs 1.

Das bedeutet, dass eine übliche Anordnung der Klinken gewählt werden kann, wobei lediglich zum Festlegen der Klinken diesen ein aktives Riegelelement zugeordnet wird. Dabei soll das Zusammenwirken zwischen Klinke und Riegelelement so einfach wie möglich ausgestaltet sein. Im vorliegenden Ausführungsbeispiel weist das Riegelelement ein Riegelplfittchen auf und ist verschiebbar der Klinke zugeordnet. Geführt wird das Riegelelement an der Drehachse und/oder an einem Führungsbolzen, der von einer der Seitenwangen abragt. Hierzu sind entsprechende Langlöcher bzw. Sacklöcher vorgesehen, in denen jeweils die Drehachse bzw. der Führungsbolzen gleiten kann. Eine geeignete Zuordnung von Führungsbolzen und Drehachsen gewährleistet, dass das Riegelelement sicher geführt wird.

Wichtig erscheint auch die Ausgestaltung der Kulisse, die mit einem Steuerbolzen an der Klinke zusammenwirkt. In einer bevorzugten Ausführungsform, weist die Kulisse eine Steuerkante auf, die mit einem schrägen Abschnitt beginnt, an die ein waagerechter oder vertikaler Abschnitt anschliesst, der dann in einen vertikalen oder waagerechten Abschnitt als Teil eines Sackloches übergeht. Die Auswahl, ob waagerechter oder vertikaler Abschnitt, rührt daher, dass das Riegelelement unterschiedlich angeordnet werden kann, je nachdem, ob es sich um eine waagerechte, schräge oder vertikale Stapelsäule handelt. Die Erfindung bezieht sich vor allem auf eine horizontale und hier auf eine "hängende" Stapelsäule. Bei dieser Anordnung ist es möglich, auf ein aktives Element zum Bedienen des Regelelementes zu verzichten. Die Kulisse zusammen mit dem Langloch für den Führungsbolzen und den Sacklöchern für Drehachse und Steuerbolzen ist so angeordnet, dass das Riegelelement nach Überfahren des Bereichs zwischen mittleren Abschnitt und letztem Abschnitt durch den Steuerbolzen unter dem Einfluss der Schwerkraft nach unten fällt, so dass hierdurch gleichzeitig auch der Steuerbolzen in das Sackloch einfährt. Hierdurch erfolgt eine automatische Verriegelung der Klinke. Diese bevorzugte Ausgestaltung bedeutet jedoch nicht, dass dieses Riegelelement nicht auch bei einer liegenden, vertikalen oder schrägen Stapelsäule Anwendung finden könnte. Hier müsste dann lediglich dem Riegelelement ein aktives Element zum Betätigen zugeordnet werden. Dies könnte bspw. eine Schraubenfeder od. dgl. sein. In einer Ausführurigsform der Stapelsäule ist das aktive Element durch ein lageenergie-speicherndes Element ersetzt. Dabei kann es sich um ein Gewicht handeln. Das Gewicht kann ein separates Bauteil sein und/oder ist von/an der Klinke teilweise oder vollständig selbst ausgebildet.

Zum Entriegeln ist den Riegelelementen dementsprechend natürlich auch eine Einrichtung zugeordnet, mit der die Riegelelemente einzeln oder auch alleine aus ihrer Riegellage gebracht werden können. Hierzu können die einzelnen Riegelelemente in Wirkverbindung stehen.

Zur Durchführung der Bewegungsabläufe von Ruhelage über Bereitschaftsstellung in Gebrauchslage ist den Klinken ein Verbindungsgestänge zugeordnet. Dieses besteht im wesentlichen aus einzelnen Verbindungsstreifen, die jeweils zwei Steuerbolzen miteinander verbinden. Dabei weist jeder Verbindungsstreifen ein Langloch auf, durch welches gewährleistet wird, dass eine vorangehende Klinke von einer Ruhelage in eine Bereitschaftsstellung gebracht werden kann, ohne dass die nachfolgenden Klinken davon beeinflusst werden. Diese verbleiben in ihrer Ruhelage. Erst wenn die Klinke aus der Bereitschaftsstellung in die Gebrauchslage gebracht wird, wird die nachfolgende Klinke in die Bereitschaftsstellung gedrückt.

Zur Rückführung der Klinken in ihre Ruhelagen ist den Klinken jeweils eine Rückholeinrichtung wie ein Kraftspeicher, insbesondere eine Schraubenfeder und/oder ein Gewicht, zugeordnet. Dabei ist natürlich vorgesehen, dass die erste Klinke nicht in Ruhelage gebracht wird, sondern in ihrer Bereitschaftsstellung verbleibt. Dies kann durch einen beliebig ausgestalteten Anschlag geschehen. Die Schraubenfeder und/oder das Gewicht sind vorteilhaft gemäss dem Hebelgesetz derart angeordnet, dass die Rückführung in die Ruhelage begünstigt wird. Insbesondere die Verwendung von Gewichten wird hier bei erfindungsgemässen Stapelsäulen vorgeschlagen, wobei diese sowohl als horizontale als auch als vertikale Stapelsäulen verwendet werden können.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht eines ersten Ausführungsbeispiels einer erfindungsgemässen Stapelsäule;
Figur 2 eine weitere perspektivische Ansicht der Stapelsäule gemäss Figur 1;
Figur 3 eine perspektivische Ansicht der Stapelsäule gemäss Figur 1 nach Abnahme von einer Seitenwange;
Figur 4 eine perspektivische Ansicht der Stapelsäule nach Figur 2 nach Abnahme der anderen Seitenwange;
Figur 5 eine Seitenansicht einer erfindungsgemässen Klinkenkette für eine Stapelsäule gemäss Figur 1;
Figur 6 eine perspektivische Ansicht eines- ersten Ausführungsbeispiels_eines erfindungsgemässen Riegelelements;
Figur 7 eine Draufsicht auf ein zweites Ausführungsbeispiel eines nicht erfindungsgemässen Riegelelements;
Figur 8 eine Draufsicht auf eine Klinkenkette dieses zweiten Ausführungsbeispiels ;
Figur 9 eine perspektivische Unteransicht der Klinkenketten gemäss Figur 8;
Figur 10 eine perspektivische Draufsicht der Klinkenkette gemäss Figur 8;
Figur 11 eine perspektivische Ansicht des zweiten Ausführungsbeispiels mit der Klinkenkette gemäss Figur 8;
Figur 12 eine weitere perspektivische Ansicht der Stapelsäule von Figur 11;
Figur 13 eine perspektivische Teilschnittansicht der Stapelsäule gemäss Figur 11 nach Wegschnitt von einer Seitenwange; und
Figur 14 eine perspektivische Teilschnittansicht der Stapelsäule nach Figur 11 1 nach Wegschnitt der anderen Seitenwange.

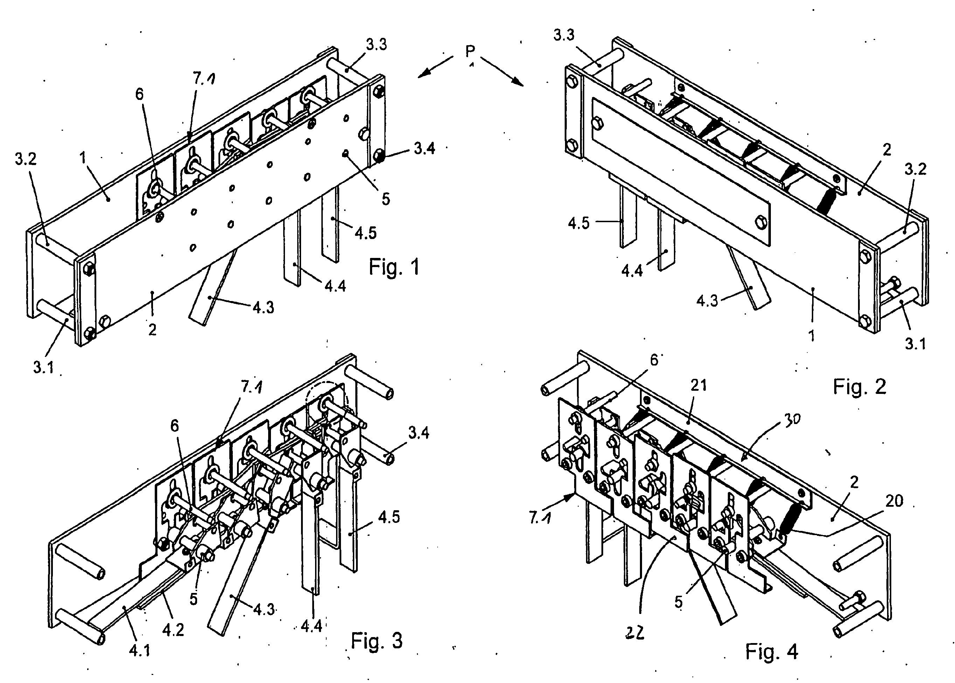

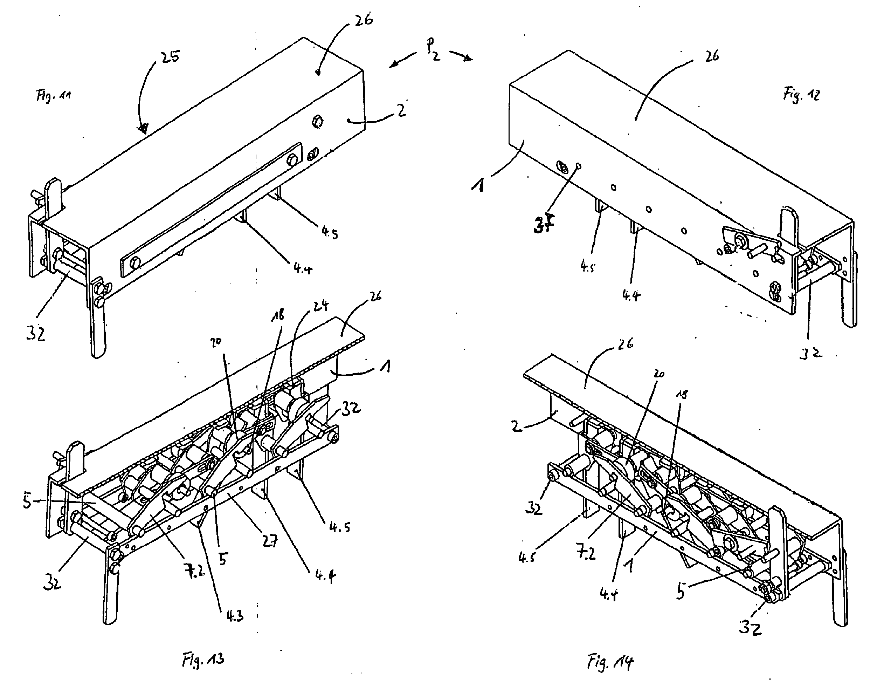

Eine Stapelsäule P₁ eines ersten Ausführungsbeispiels gemäss den Figuren 1 und 2 und eines zweiten Ausführungsbeispiels gemäss Figuren 11 und 12 weist jeweils zwei Seitenwangen 1 und 2 auf. Das zweite Ausführungsbeispiel ist nicht Teil der beanspruchten Erfindung. Im ersten Ausführungsbeispiel sind beide Seitenwangen 1 und 2 über vier Verbindungsbolzen 3.1 bis 3.4 miteinander verbunden sind. Im zweiten Ausführungsbeispiel sind die Seitenwangen 1 und 2 anstelle über die Verbindungsbolzen 3.1 bis 3.4 über eine Rückwand 26 miteinander verbunden.

In beiden Ausführungsbeispielen sind zwischen den Seitenwangen 1 und 2 Klinken 4.1 bis 4.5 (siehe auch Figur 3 und 4 bzw. Figuren 9 bis 14) jeweils an einer Drehachse 5 dreh- bzw. schwenkbar gelagert. Aufgrund der Ausgestaltung eines Riegelelements 7 des ersten Ausführungsbeispiels ist etwa vertikal oberhalb der Drehachse 5 noch jeweils ein Führungsbolzen 6 zwischen den beiden Seitenwangen 1 und 2 angeordnet.

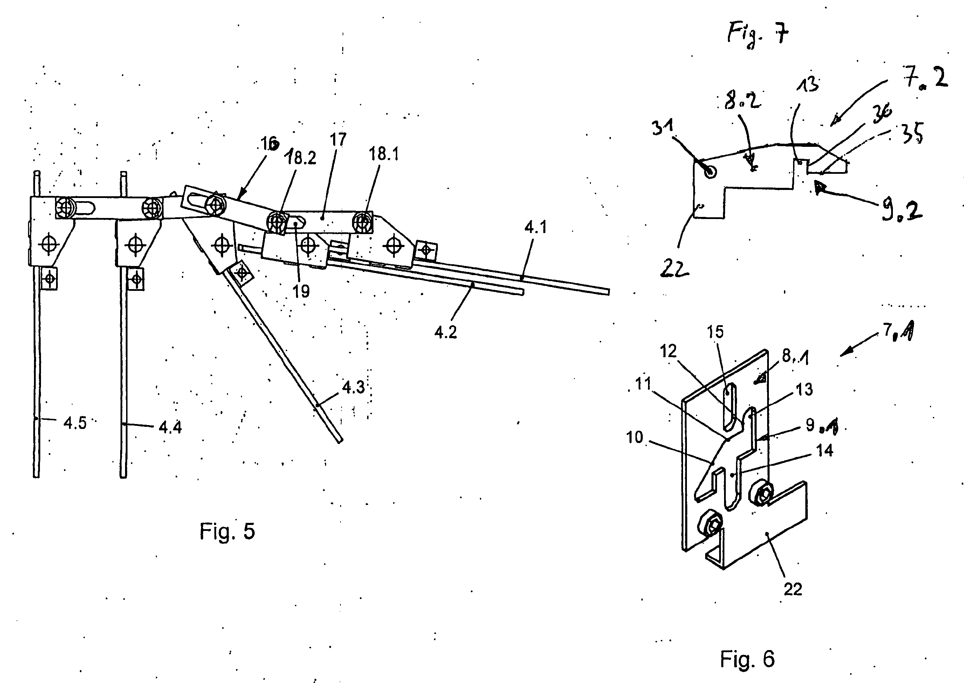

Sowohl im ersten Ausführungsbeispiel als auch im zweiten Ausführungsbeispiel ist jeder Klinke 4.1 bis 4.5 ein Riegelelement 7.1 bzw. 7.2 zugeordnet, welches in Figur 6 für das erste Ausführungsbeispiel mit 7.1 und in Figur 7 für das zweite Ausführungsbeispiel mit 7.2. vergrössert dargestellt ist.

Das Riegelelement 7.1 des ersten Ausführungsbeispiels weist ein Riegelplättchen 8.1 auf, in welches eine Kulisse 9.1 eingeformt ist. Wesentlicher Teil der Kulisse 9.1 ist eine Steuerkante, die sich aus einem schrägen Abschnitt 10, einem waagerechten Abschnitt 11 und einem senkrechten Abschnitt 12 als Teil eines Sackloches 13 zusammensetzt. Des weiteren bildet die Kulisse 9.1 etwa vertikal nach unten ein weiteres Sackloch 14 zur Aufnahme der Drehachse 5 aus. In vertikaler Ebene zu diesem Sackloch 14 verläuft oberhalb der Kulisse 9.1 noch ein Langloch 15, welches der Aufnahme eines Führungsbolzens 6 dient. Mittels des Sackloches 14 und des Langloches 15 wird das Riegelelement 7.1 in etwa vertikaler Ebene geführt.

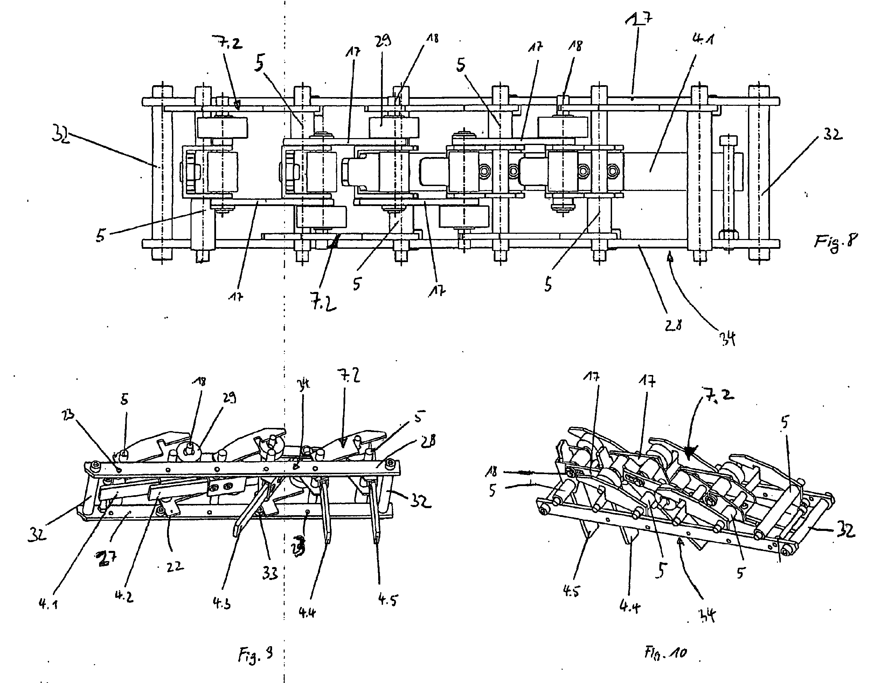

Das Riegelelement 7.2 des zweiten Ausführungsbeispiels weist an einem Endabschnitt eine Drehachsenaufnahme 31 auf, mittels der das Riegelelement 7.2 schwenkbar auf einer Drehachse 5 gelagert ist (siehe Figuren 9 und 10). An dem der Drehachsenaufnahme 31 gegenüberliegenden Endanschnitt des Riegelelementes 7.2 ist ein Sackloch 13 vorgesehen, an das sich nacheinander ein waagrechter und senkrechter Randabschnitt 35, 36 anschliessen, die eine offene Kulisse 9.2 bilden.

Mit Hilfe der Randabschnitte 35, 36 wird der Steuerbolzen 18 hin zu dem Sackloch 13 geführt, mit dem der Steuerbolzen 18 sich in der Gebrauchslage der Klinke verriegelt.

Wie in Figur 5 erkennbar, sind im ersten Ausführungsbeispiel die Klinken 4.1 bis 4.5 über ein Verbindungsgestänge 16 miteinander verbunden, wobei das Verbindungsgestänge aus einzelnen Verbindungsstreifen 17 zusammengesetzt ist. Jeder Verbindungsstreifen 17 ist einends gelenkig mit einem Steuerbolzen 18 der vorangehenden Klinke verbunden, während ein andernends vorgesehenes Langloch 19 von einem Steuerbolzen 18.2 der nachfolgenden Klinke 4.2 durchsetzt wird.

Die Verbindung der Klinken 4.1 bis 4.5 beim zweiten Ausführungsbeispiel wird durch Verbindungsstreifen 17 bewirkt, die jeweils, wie in Figur 8 gezeigt, wechselseitig angeordnet sind.

Des weiteren ist im ersten Ausführungsbeispiel der Stapelsäule P₁_jede Klinke 4.1 bis 4.5 über eine Schraubenfeder 20 mit einem Winkelstreifen 21 verbunden, wobei der Winkelstreifen 21 an der Seitenwange 2 festliegt. Gemeinsam wirken der Winkelstreifen 21 und die Schraubenfeder 20 u.a. als eine Rückholeinrichtung 30, die die jeweilige Klinke 4.1 bis 4.6 in ihre Ruhelage vorspannt.

Im zweiten Ausführungsbeispiel der Stapelsäule P₂ ist an jeder Klinke 4.1 bis 4.5 als Rückholeinrichtung (ohne Bezugzeichen) ein ringförmiges Gewicht 29 vorgesehen (siehe Figuren 8 bis 10), das beispielsweise über eine Splintsicherung am Steuerbolzen 18 der jeweiligen Klinke gesichert angeordnet ist. Die Klinken 4.1 bis 4.5 sind mit dem jeweiligen Gewichte 29 derart ausbalanciert, dass das Gewicht 29 die zugehörige Klinke in deren Ruhelage drückt. Das jeweilige Gewicht 29 ist bevorzugt hinter der Drehachse 5 der Klinke 4.1 bis 4.5 an dem der jeweiligen Klinke 4.1 bis 4.5 zugehörigen Steuerbolzen 18 angeordnet (siehe auch Figur 13).

An der Rückwand 26 eines Gehäuses 25 der Stapelsäule P₂ des zweiten Ausführungsbeispiels sind an einer geeigneten Position Anschlagabschnitte 24 ausgebildet (siehe Figur 13 und 14), die als Stopper zum Beschränken der Schwenkbewegungen der Klinken 4.1 bis 4.5 (siehe Figur 13) vorgesehen sind. Die Anschlagabschnitte 24 sind an der Rückwand 3 derart angeordnet, dass sie jeweils mit einem Endabschnitt der entsprechenden Klinke 4.1 bis 4.4 in Wirkverbindung stehen, wenn die Klinke in ihrer Gebrauchsstellung ist.

Beim Ausführungsbeispiel der Stapelsäule P₁ wirken die Führungsbolzen 6, die sich zwischen den Seitenwangen 1,2 erstrecken, wie die Anschlagabschnitte 24 (siehe Figur 1 und 2).

In den Figuren 8 bis 10 ist neben der Klinkenkette eine Entriegelungsvorrichtung 34 für die Klinken 4.1 bis 4.5 Stapelsäule P₂ gezeigt, die zwei im Wesentlichen parallel angeordnete, zueinander beabstandete Seitenstreifen 27 und 28 aufweist, die über zwei an ihren Endabschnitten angeordneten Verbindungsbolzen 32 miteinander befestigt sind. An den Seitenstreifen 27 und 28 sind in regelmässigen Abständen wechselseitig Vorsprünge 33 vorgesehen, die mit einem Endabschnitt, insbesondere einem Stützstreifenabschnitt 22 eines zugehörigen Riegelelementes 7.2 in Eingriff bringbar sind (siehe Figur 9 und 10). Mit Hilfe der Entriegelungsvorrichtung 34 werden die einzelnen Riegelelemente 7.2 aus der Gebrauchsstellung, in der der Steuerbolzen 18 mit dem Sackloch 13 des Riegelelements 7.2 in Eingriff steht, derart verschoben, dass die Klinken 4.1 bis 4.5 in ihre Ruhelage zurückschwenken können.

Ferner sind in den Seitenstreifen 27, 28 Montageöffnungen 23 vorgesehen, die mit zugehörigen Montageöffnungen 37 im Gehäuse 25 der Stapelsäule P₂ korrespondieren, so dass geeignete Befestigungselemente, wie Bolzen oder Schrauben, durch beide Montageöffnungen 23, 37 zum Sichern der Entriegelungsvorrichtung 34 in dem Gehäuse 25 einsetzbar sind.

In beiden Ausführungsformen ist das jeweilige Riegelelement 7.1 bzw 7.2 an einer zugehörigen Drehachse 5 verlagerbar angebracht. In dem ersten Ausführungsbeispiel der Stapelsäule P₁ ist die Drehachse 5 des Riegelelementes 7.1 mit der Drehachse der Klinke 4 identisch. Das Riegelelement 7.1 wirkt sowohl mit der Drehachse 5 als auch mit dem Führungsbolzen 6 zusammen, so dass beim ersten Ausführungsbeispiel jedes Riegelelement 7.1 von P₁ im Wesentlichen translatorisch gelagert ist (siehe Figur 3 und 4).

In dem Ausführungsbeispiel der Stapelsäule P₂ ist das Riegelelement 7.2 an der Drehachse 5 schwenkbar gelagert. Allerdings ist die Drehachse 5 des Riegelelement von P₂ nicht mit der Drehachse 5 der Klinke 4 identisch, die das Riegelelement 7.2 verriegeln soll sondern ist der Drehachse 5 einer nachfolgenden Klinke 4 zugeordnet. Das Riegelelement 7.2 der ersten Klinke 4.1 weist eine eigene Drehachse 5 auf, an der keine Klinke angeordnet ist (siehe Figuren 10 und 13). Ausserdem sind die Riegelelemente 7.2 wie in Figur 8 dargestellt, alternierend wie die Verbindungsstreifen 17 des Verbindungsgestänges angeordnet.

Die Funktionsweise der vorliegenden Erfindung des ersten Ausführungsbeispiels ist wie folgend:
In einer nicht gezeigten Grundstellung befinden sich die Klinken 4.1 bis 4.4 in Ruhelage und nur die Klinke 4.5 befindet sich in Bereitschaftsstellung. In den Figuren 1 bis 4 sind nur die Klinken 4.1 und 4.2 in Ruhelage, die Klinke 4.3 in Bereitschaftsstellung und die Klinken 4.4 und 4.5 in Gebrauchslage dargestellt.

In Bereitschaftsstellung befindet sich der Steuerbolzen 18 der entsprechenden Klinke an der Steuerkante der Kulisse 9 im Bereich zwischen dem schrägen Abschnitt 10 und dem waagerechten Abschnitt 11. Wird nun die entsprechende Klinke durch einen zu lagernden Gegenstand belastet, schwenkt die Klinke um die Drehachse 5, wobei der Steuerbolzen 18 den waagerechten Abschnitt 11 1 der Steuerkante abläuft, bis er in das Sackloch 13 eindringt. Wird die Stapelsäule P als "hängende" Stapelsäule verwendet, so fällt das Riegelelement 7 bei Überschreiten des waagerechten Abschnittes 11 der Steuerkante unter dem Einfluss der Schwerkraft vertikal nach unten, wodurch der Steuerbolzen in das Sackloch 13 gelangt. Handelt es sich dagegen um eine "liegende" Stapelsäule, so wird das Riegelelement 7.1 entsprechend durch ein beliebiges Hilfsmittel, wie bspw. eine Schraubenfeder als Kraftspeicher angehoben. Die "liegende" Stapelsäule ist auch als vertikale Stapelsäule verwendbar.

Während dem Schwenken in die Gebrauchslage läuft der Steuerbolzen 18 das Langloch in dem Verbindungsstreifen 17 ab und drückt die nachfolgende Klinke in Bereitschaftsstellung. Nunmehr kann diese nachfolgende Klinke mit einem Lagergut belastet werden.

Sollen die Klinken entriegelt werden, wird ein vertikaler Druck auf ein oder die Riegelelemente 7.1 ausgeübt, wobei sich benachbarte Riegelelemente 7.1 mit jeweils einem Stützstreifen 22 untergreifen. Auf diese Weise gelangen die Steuerbolzen ausser Eingriff mit den Sacklöchern 13 und geben so die Klinken für ein Schwenken um die Drehachsen 5 frei. Dieses Schwenken wird durch die Schraubenfedern 20 unterstützt. Lediglich die letzte Klinke 4.5 gelangt dabei nicht in Ruhelage, sondern wird durch einen entsprechenden Anschlag an einer der beiden Seitenwangen 1 oder 2 in Bereitschaftsstellung gehalten.

Die Funktionsweise des zweiten Ausführungsbeispiels unterscheidet sich zum o.g. ersten Ausführungsbeispiel dadurch, dass aufgrund der Ausbildung der Riegelelemente 7.2 und der Klinken, die am Steuerbolzen 18 mit einem Kraftspeicherelement in Form eines Gewichts versehen sind, diese Stapelsäule der zweiten Ausführungsform sowohl in horizontaler als auch in vertikaler Position verwendbar ist, ohne dass an dem Riegelelement 7.2 eine Schraubenfeder wirkt. Im Gegensatz zu den Riegelelementen 7.1 des ersten Ausführungsbeispiels der Stapelsäule P₁ untergreifen sich die Stützstreifen 22 der Riegelelemente 7.2 des zweiten Ausführungsbeispiels mit ihren Stützstreifen nicht gegenseitig. Vielmehr wirkt in dem zweiten Ausführungsbeispiel der Stapelsäule P₂ der Stützstreifen 22 des Riegelelements 7.2 mit einem an einer Entriegelungsvorrichtung 34 vorgesehenen Vorsprung 33 zusammen, die der Klinkenkette zugeordnet ist (siehe Figuren 8 bis 10), womit die Verriegelung zwischen Riegelelement 7.2 und Klinken 4.1 bis 4.5 gelöst werden kann.

Die besondere Ausgestaltung und Anordnung der Klinkenkette des zweiten Ausführungsbeispiels mit der Entriegelungsvorrichtung 34 ermöglicht die jeweiligen Kinken 4.1 bis 4.5 aus ihrer Verriegelungsposition mit dem zugehörigen Riegelelement 7.2 in eine Entriegelungsposition zu verschieben, so dass die Klinken 4.1 bis 4.5 von der Gebrauchslage in die Ruhelage überführt werden können.

In einer nicht gezeigten Grundstellung des zweiten Ausführungsbeispiels befinden sich alle Klinken 4.1 bis 4.5 in der Ruhelage. Die Ruhelage der Klinken ist beispielhaft mit den Klinken 4.1, 4.2 in Figur 8 bzw. Figur 9 gezeigt.

In der in Figur 9 gezeigten Ruhelage der Klinke 4.2 ist der Steuerbolzen 18 der Klinke 4.2 ausser Eingriff mit dem Riegelelement 7.2. Erst wenn die Klinke 4.2 in Bereitschaftsstellung bewegt wird, kommt der Steuerbolzen in Eingriff mit dem Randabschnitt 35 des Riegelelements 7.2. Wird nun die Klinke 4.2 von Figur 9 von der Bereitschaftsstellung in die Gebrauchslage bewegt, wird der Steuerbolzen 18 entlang des Randabschnitts 35 zu dem Randabschnitt 36 hin zu dem Sackloch 13 des Riegelelements 7. 2 geführt. Die Randabschnitte 35, 36 und das Sackloch 13 bilden zusammen in dem Riegelelement 7.2 eine offene Kulisse 9.2 aus, wie in Figur 7 gezeigt. Wenn die Klinke 4.2 ihre Gebrauchslage erreicht hat, verriegelt der Steuerbolzen 18 mit dem Sackloch 13. Soll nun diese Verriegelung aufgehoben werden, werden die Stützstreifen 22 der Riegelelemente 7.2 mittels der Entriegelungsvorrichtung 34 betätigt, so dass die Verriegelung mit dem Steuerbolzen der Klinke 4.1 und dem Sackloch 13 des Riegelelements 7.2 aufgehoben wird. Hierdurch wird dann allen Klinken 4.1 bis 4.5, die mit dem zugehörigen Riegelelement 7.2 verriegelt sind, ermöglicht in die Ruhelage zurückzuschwenken, in die sie aufgrund des Kraftspeichers in Form eines Gewichtes 29 vorgespannt sind. Die bereits in der die Ruhelage befindlichen Klinken verbleiben hierbei in dieser.

Das Überführen der jeweiligen Klinken 4.1 bis 4.5 von der Ruhelage über die Bereitschaftsstellung in die Gebrauchslage erfolgt im zweiten Ausführungsbeispiels auf ähnliche Weise wie beim ersten Ausführungsbeispiel über die Verbindungsstreifen 17 des Verbindungsgestänges 16 wie in Figuren 8 bis 10 dargestellt.

Aufgrund der sehr vorteilhaften Anordnung des Gewichts 29 am Steuerbolzen 18 kann diese Rückführung der Klinken 4.1 bis 4.5 von der Gebrauchsstellung in die Ruhelage sowohl in einer horizontalen als auch in einer vertikalen Anordnung der Stapelsäule P₂ des zweiten Ausführungsbeispiels durchgeführt werden.

Das Riegelelement 7.2 ist um eine Drehachse 5 einer nachfolgenden Klinke schwenkbar gelagert.

Ausserdem weist das Riegelelement 7.2 einerseits eine Drehachsenaufnahme 31 und andererseits ein Sackloch 13 auf.

Daneben ist das Sackloch 13 zum Verriegeln einer Klinke 7.1, 7.2 in Gebrauchslage mit dem zugehörigen Steuerbolzen (18) verriegelbar.

Weiterhin ist die Verriegelung des Steuerbolzens 18 der jeweiligen Klinke 4.1 bis 4.5 mit dem zugehörigen Riegelelement 7.2 mittels einer Entriegelungsvorrichtung 34 lösbar.

Zuletzt weist die Entriegelungsvorrichtung 34 einen Seitenstreifen 27, 28 auf, an dem ein Vorsprung 33 vorgesehen ist, der mit dem Stützstreifen 22 des-Riegelelements 7.2 zusammenwirkt.

### Bezugszeichenliste

| | | | | | |
|---|---|---|---|---|---|
| 1 | Seitenwange | 34 | Entriegelungsvorrichtung | 67 | |
| 2 | Seitenwange | 35 | Randabschnitt | 68 | |
| 3 | Verbindungsbolzen | 36 | Randabschnitt | 69 | |
| 4 | Klinke | 37 | Montageöffnung | 70 | |
| 5 | Drehachse | 38 | | 71 | |
| 6 | Führungsbolzen | 39 | | 72 | |
| 7 | Riegelelement | 40 | | 73 | |
| 8 | Rieqelplättchen | 41 | | 74 | |
| 9 | Kulisse | 42 | | 75 | |
| 10 | schräger Abschnitt | 43 | | 76 | |
| 11 | waagerechter Abschnitt | 44 | | 77 | |
| 12 | vertikaler Abschnitt | 45 | | 78 | |
| 13 | Sackloch | 46 | | 79 | |
| 14 | Sackloch | 47 | | | |
| 15 | Langloch | 48 | | | |
| 16 | Verbindungsgestänge | 49 | | P₁ | Stapelsäule |
| 17 | Verbindungsstreifen | 50 | | P₂ | Stapelsäule |
| 18 | Steuerbolzen | 51 | | | |
| 19 | Langloch | 52 | | | |
| 20 | Schraubenfeder | 53 | | | |
| 21 | Winkelstreifen | 54 | | | |
| 22 | Stützstreifen | 55 | | | |
| 23 | Montaqeöffnung | 56 | | | |
| 24 | Anschlaqabschnitt | 57 | | | |
| 25 | Gehäuse | 58 | | | |
| 26 | Rückwand | 59 | | | |
| 27 | Seitenstreifen | 60 | | | |
| 28 | Seitenstreifen | 61 | | | |
| 29 | Gewicht | 62 | | | |
| 30 | Rückholeinrichtung | 63 | | | |
| 31 | Drehachsenaufnahme | 64 | | | |
| 32 | Verbindungsbolzen | 65 | | | |
| 33 | Vorsprung | 66 | | | |

## Patentansprüche

1. Stapelsäule zum Festlegen von Lagergut mittels Klinken (4.1 bis 4.5), welche schwenkbar um eine Drehachse (5) von einer Ruhelage über eine Bereitschaftsstellung in eine Gebrauchslage an zumindest einer Seitenwange (1,2) angeordnet sind, wobei an der Klinke (4.1 bis 4.5) ein Steuerbolzen (18) vorgesehen ist, der zum Festlegen der Klinke (4.1 bis 4.5) in Gebrauchslage mit einer Kulisse (9.1) zusammenwirkt, die einem Riegelelement (7.1) eingeformt ist,
**dadurch gekennzeichnet,**
**dass** das Riegelelement (7.1) an einem Führungsbolzen (6) geführt ist, der von der Seitenwangen (1, 2) abragt und der Führungsbolzen (6) in ein Langloch (15) in dem Riegelelement (7.1) eingreift.

2. Stapelsäule nach Anspruch 1, **dadurch gekennzeichnet, dass** das Riegelelement (7.1) ein Riegelplättchen (8.1) aufweist.

3. Stapelsäule nach Anspruch 1 oder 2, **dadurch gekennzeichnet, dass** das Riegelelement (7.1) an der Drehachse (5) geführt ist bzw. um eine Drehachse (5) schwenkt.

4. Stapelsäule nach einem der vorhergehenden Ansprüche, **dadurch gekennzeichnet, dass** der Führungsbolzen (6) und die Drehachse (5) einander zugeordnet sind.

5. Stapelsäule nach einem der vorhergehenden Ansprüche, **dadurch gekennzeichnet, dass** die Kulisse (9.1) des Riegelelements (7.1) eine Steuerkante aufweist, die mit einem schrägen Abschnitt (10) beginnt, in einen waagrechten oder vertikalen Abschnitt (11) übergeht, an den ein etwa vertikaler oder waagrechter Abschnitt (12) als Teil eines Sacklochs (13) anschliesst.

6. Stapelsäule nach einem der vorhergehenden Ansprüche, **dadurch gekennzeichnet, dass** den Riegelelementen (7.1) eine Einrichtung zum Entriegeln zugeordnet ist.

7. Stapelsäule nach Anspruch 6, **dadurch gekennzeichnet, dass** sich benachbarte Riegelelemente (7.1) mit einem Stützstreifen (22) untergreifen.

8. Stapelsäule nach einem der vorhergehenden Ansprüche, **dadurch gekennzeichnet, dass** die Klinken (4.1 bis 4.5) miteinander über ein Verbindungsgestänge (16) verbunden sind.

9. Stapelsäule nach einem der vorhergehenden Ansprüche **dadurch gekennzeichnet, dass** zwischen zwei Klinken (4.1 bis 4.5) jeweils ein Verbindungsstreifen (17) vorgesehen ist.

10. Stapelsäule nach Anspruch 9, **dadurch gekennzeichnet, dass** der Verbindungsstreifen (17) jeweils zwei Steuerbolzen (18) miteinander verbindet.

11. Stapelsäule nach Anspruch 10, **dadurch gekennzeichnet, dass** der Steuerbolzen (18) einer nachfolgenden Klinke ein Langloch (19) in dem Verbindungsstreifen (17) durchgreift.

12. Stapelsäule nach einem der vorhergehenden Ansprüche, **dadurch gekennzeichnet, dass** eine Mehrzahl der Klinken (4.1 bis 4.5) unter der Wirkung eines Kraftspeichers (20, 29) steht.

13. Stapelsäule nach Anspruch 12, **dadurch gekennzeichnet, dass** der Kraftspeicher als Schraubenfeder (20) ausgebildet ist und die Klinke (4.1 bis 4.5) mit einem Winkelstreifen (21) an der Seitenwange (1,2) verbindet.

14. Stapelsäule nach Anspruch 13, **dadurch gekennzeichnet, dass** der Kraftspeicher als Gewicht (29) ausgebildet ist, das an dem Steuerbolzen (18) angeordnet ist.

15. Stapelsäule nach einem der vorhergehenden Ansprüche, **dadurch gekennzeichnet, dass** sich die Klinken (4.1 bis 4.5) zwischen zwei Seitenwangen (1,2) befinden.

## Claims

1. A stacking column for fixing stored goods by means of latches (4.1 to 4.5) which are arranged on at least one side panel (1, 2) such that they are pivotal about an axis of rotation (5) from a rest positions by way of a ready positions into a use position, there being provided on the latch (4.1 to 4.5) a control pin (18) which, for fixing the latch (4.1 to 4.5) in the use position, cooperates with a slideway (9.1) which is made in a locking element (7.1), **characterised in that** the locking element (7.1) is guided on a guide pin (6) which projects from the side panels (1, 2), and the guide pin (6) engages in an elongate slot (15) in the locking element (7.1).

2. A stacking column according to Claim 1, **characterised in that** the locking element (7.1) includes a locking plate (8.1).

3. A stacking column according to Claim 1 or 2, **characterised in that** the locking element (7.1) is guided on the axis of rotation (5) and/or pivots about an axis of rotation (5).

4. A stacking column according to one of the preceding claims, **characterised in that** the guide pin (6) and the axis of rotation (5) are associated with one another.

5. A stacking column according to one of the preceding claims, **characterised in that** the slideway (9.1) of the locking element (7.1) includes a control edge which begins with an oblique portion (10) and merges into a horizontal or vertical portion (11) which is adjoined by an approximately vertical or horizontal portion (12) as part of a blind hole (13).

6. A stacking column according to one of the preceding claims, **characterised in that** a means for unlocking is associated with the locking elements (7.1).

7. A stacking column according to Claim 6, **characterised in that** adjacent locking elements (7.1) reach under one another by means of a supporting strip (22).

8. A stacking column according to one of the preceding claims, **characterised in that** the latches (4.1 to 4.5) are connected to one another by way of a connection linkage (16).

9. A stacking column according to one of the preceding claims, **characterised in that** a connection strip (17) is provided in each case between two latches (4.1 to 4.5).

10. A stacking column according to Claim 9, **characterised in that** the connection strip (17) in each case connects two control pins (18) to one another.

11. A stacking column according to Claim 10, **characterised in that** the control pin (18) of a downstream latch reaches through an elongate slot (19) in the connection strip (17).

12. A stacking column according to one of the preceding claims, **characterised in that** a plurality of latches (4.1 to 4.5) is acted upon by an energy storage means (20, 29).

13. A stacking column according to Claim 12, **characterised in that** the energy storage means takes the form of a helical spring (20) and connects the latch (4.1 to 4.5) to an angled strip (21) on the side panel (1, 2).

14. A stacking column according to Claim 13, **characterised in that** the energy storage means takes the form of a weight (29) which is arranged on the control pin (18).

15. A stacking column according to one of the preceding claims, **characterised in that** the latches (4.1 to 4.5) are located between two side panels (1, 2).

## Revendications

1. Colonne d'empilage pour fixer des produits à stocker au moyen de poignées (4.1 à 4.5) qui sont disposées de manière pivotable, autour d'un axe de rotation (5), d'une position de repos, en passant par une position de mise à disposition, en une position d'utilisation, sur au moins une joue latérale (1, 2), à la poignée (4.1 à 4.5) étant prévue un boulon de réglage (18) qui, pour la fixation de la poignée (4.1 à 4.5), coopère, en position d'utilisation, avec une coulisse (9.1) qui est formée dans un élément de verrou (7.1),
**caractérisée par le fait**
**que** l'élément de verrou (7.1) est guidé le long d'un boulon de guidage (6) qui fait saillie des joues latérales (1, 2) et que le boulon de guidage (6) s'engage dans un trou oblong (15) dans l'élément de verrou (7.1).

2. Colonne d'empilage selon la revendication 1, **caractérisée par le fait que** l'élément de verrou (7.1) présente une plaquette de verrou (8.1).

3. Colonne d'empilage selon la revendication 1 ou 2, **caractérisée par le fait que** l'élément de verrou (7.1) est guidé le long de l'axe de rotation (5) ou pivote autour de l'axe de rotation (5).

4. Colonne d'empilage selon l'une des revendications précédentes, **caractérisée par le fait que** le boulon de guidage (6) et l'axe de rotation (5) sont associés l'un à l'autre.

5. Colonne d'empilage selon l'une des revendications précédentes, **caractérisée par le fait que** la coulisse (9.1) de l'élément de verrou (7.1) présente un bord de commande qui commence par un segment oblique (10), passe dans un segment horizontal ou vertical (11) auquel se raccorde un segment environ vertical ou horizontal (12) comme partie d'un trou borgne (13).

6. Colonne d'empilage selon l'une des revendications précédentes, **caractérisée par le fait qu'**aux éléments de verrou (7.1) est associé un dispositif de déverrouillage.

7. Colonne d'empilage selon la revendication 6, **caractérisée par le fait que** des éléments de verrou adjacents (7.1) viennent en prise l'un par-dessous de l'autre par une lame de support (22).

8. Colonne d'empilage selon l'une des revendications précédentes, **caractérisée par le fait que** les poignées (4.1 à 4.5) sont reliées l'une à l'autre par l'intermédiaire d'une barre de connexion (16).

9. Colonne d'empilage selon l'une des revendications précédentes, **caractérisée par le fait qu'**entre deux poignées (4.1 à 4.5) est chaque fois prévue une lame de connexion (17).

10. Colonne d'empilage selon la revendication 9, **caractérisée par le fait que** la lame de connexion (17) relie chaque fois deux boulons de réglage (18) l'un à l'autre.

11. Colonne d'empilage selon la revendication 10, **caractérisée par le fait que** le boulon de réglage (18) d'un poignée suivante traverse un trou oblong (19) dans la lame de connexion (17).

12. Colonne d'empilage selon l'une des revendications précédentes, **caractérisée par le fait qu'**une pluralité de poignées (4.1 à 4.5) se trouve sous l'action d'un accumulateur de force (20, 29).

13. Colonne d'empilage selon la revendication 12, **caractérisée par le fait que** l'accumulateur de force est réalisé sous forme de ressort à boudin (20) et connecte la poignée (4.1 à 4.5) par une lame en équerre (21) à la joue latérale (1, 2).

14. Colonne d'empilage selon la revendication 13, **caractérisée par le fait que** l'accumulateur de force est réalisé sous forme de poids (29) qui est disposé sur le boulon de réglage (18).

15. Colonne d'empilage selon l'une des revendications précédentes, **caractérisée par le fait que** les poignées (4.1 à 4.5) se trouvent entre deux joues latérales (1,2).
